(19)

**Europäisches Patentamt**
**European Patent Office**
**Office européen des brevets**

(11) **EP 4 776 418 A1**

(12) **EUROPEAN PATENT APPLICATION**

(43) Date of publication:
**15.07.2026 Bulletin 2026/29**

(21) Application number: **26150691.9**

(22) Date of filing: **07.01.2026**

(51) International Patent Classification (IPC):
*H01M 50/443* (2021.01)    *H01M 50/449* (2021.01)
*H01M 50/403* (2021.01)    *H01M 50/414* (2021.01)
*H01M 50/451* (2021.01)    *H01M 50/446* (2021.01)

(52) Cooperative Patent Classification (CPC):
**H01M 50/446; H01M 50/403; H01M 50/414;**
**H01M 50/443; H01M 50/449; H01M 50/451**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **08.01.2025 KR 20250002574**

(71) Applicant: **SK On Co., Ltd.**
**Seoul 03161 (KR)**

(72) Inventors:
• **JOO, Dong Jin**
  **Daejeon 34124 (KR)**
• **KIM, Whee Sung**
  **Daejeon 34124 (KR)**
• **SHIN, Jae In**
  **Daejeon 34124 (KR)**

(74) Representative: **Stolmár & Partner**
**Patentanwälte PartG mbB**
**Blumenstraße 17**
**80331 München (DE)**

(54) **SEPARATOR, METHOD OF MANUFACTURING THE SAME, AND ELECTRODE ASSEMBLY COMPRISING THE SAME**

(57)    The present disclosure relates to a separator, a method for manufacturing the same, and an electrode assembly including the same. The separator according to one aspect comprises: a substrate; and a coating layer formed on at least one surface of the substrate, wherein the coating layer comprises an inorganic material and a first binder, a glass transition temperature of the first binder is 100 °C or less, and the following Equation 1 can be satisfied:

[Equation 1]

$$1.2 \leq D_{B1}/T_C \leq 2.0$$

In Equation 1, $D_{B1}$ is a particle diameter (D50) at a volume fraction of 50% in a cumulative particle size distribution of the first binder, and $T_c$ is a thickness of the coating layer.

FIG. 1

EP 4 776 418 A1

**Description**

BACKGROUND OF THE INVENTION

1. Field

The present disclosure relates to a separator, a method for manufacturing the same, and an electrode assembly including the same.

2. Description of the Related Art

As the applications of secondary batteries expand, there is an increasing demand for larger-area and higher-capacity batteries. A secondary battery generally comprises a positive electrode, a negative electrode, and a separator disposed between the positive and negative electrodes. Various methods have been attempted to impart functionality to porous thin-film separators, which generally include a polymer or a nonwoven fabric and are commonly used as the separator.

One example of such attempts involves forming a fusible layer on at least one surface of the separator and fusing it to each electrode to improve battery performance. With the rapidly increasing trend in battery capacity, the area of the electrodes used is also rapidly increasing. In such batteries, portions of the electrodes may become non-contacting or lifted during charge-discharge cycles, or phenomena such as battery swelling or deformation may occur, resulting in inferior lifespan characteristics. Therefore, by forming a fusible layer on at least one surface of the separator, it is possible to prevent lifting, swelling, or deformation between electrodes, thereby improving lifespan characteristics. Moreover, when a large number of electrodes are stacked to assemble an electrode assembly, electrode misalignment (i.e., poor electrode alignment) that occurs can also be improved.

Another example of attempts involves forming a heat-resistant layer on at least one surface of the separator to improve the structural stability of the substrate. Conventional materials used as separator substrates are mainly produced by stretching, leaving residual stresses that cause contraction in the stretched direction; thus, they tend to shrink when the temperature rises. By forming a material with excellent mechanical rigidity and thermal stability, such as an inorganic material, as the heat-resistant layer, the mechanical, structural, and thermal stability of the separator can be improved.

As a combination of these attempts, research has been conducted to implement both a heat-resistant layer and a fusible layer. This is mainly attempted by additionally introducing a fusible layer on the heat-resistant layer. However, if the fusible layer is too thick, the ion migration distance increases, leading to higher internal resistance. Therefore, efforts have been made to configure the fusible layer as thinly and uniformly as possible. Nonetheless, in such attempts, achieving the target level of fusibility has been difficult, and the binder contained in the fusible layer can swell in the electrolyte, blocking the pores of the separator, thereby increasing battery resistance or deteriorating safety. Accordingly, there is a demand for a separator capable of providing excellent fusibility while appropriately controlling the content of the binder contained in the fusible layer.

SUMMARY OF THE INVENTION

that achieves sufficient fusibility while minimizing the content of the binder used for fusing between the electrodes and the separator, and further exhibits excellent mechanical, structural, and thermal stability.

According to another aspect of the present disclosure, a method for manufacturing a separator can be provided that has excellent processability and manufacturing economy.

According to another aspect of the present disclosure, an electrode assembly can be provided that exhibits excellent fusibility between the electrodes and the separator, as well as superior resistance characteristics, lifespan, safety, and mechanical, structural, and thermal stability.

According to another aspect of the present disclosure, a method for manufacturing an electrode assembly can be provided that has excellent processability and manufacturing economy.

Meanwhile, the present disclosure can be widely applied in green technology fields such as electric vehicles (EVs), battery charging stations (BCSs), energy storage systems (ESSs), and other battery-utilizing systems including photovoltaics and wind power. Furthermore, the present disclosure can be applied to eco-friendly mobility, including electric vehicles (EVs) and hybrid vehicles, to suppress air pollution and greenhouse gas emissions and thereby mitigate climate change.

As a technical means to achieve the technical objects, a separator according to the present disclosure comprises: a substrate; and a coating layer formed on at least one surface of the substrate, wherein the coating layer comprises an inorganic material and a first binder, a glass transition temperature of the first binder is 100 °C or less, and the following Equation 1 can be satisfied:

[Equation 1]

$$1.2 \leq D_{B1}/T_C \leq 2.0$$

In Equation 1, $D_{B1}$ is a particle diameter (D50) at a volume fraction of 50% in a cumulative particle size distribution of the first binder, and $T_C$ is a thickness of the coating layer.

In one embodiment of the separator, the following Equation 2 can also be satisfied:

[Equation 2]

$$1.4 \leq D_{B1}/T_C \leq 1.8$$

In Equation 2, $D_{B1}$ and $T_C$ are as defined above.

In one embodiment of the separator, at least a portion of the first binder may be in contact with the substrate while at least a portion is exposed to the outside.

In one embodiment of the separator, the substrate may comprise at least one of a porous polymer and a porous nonwoven fabric.

In one embodiment of the separator, the glass transition temperature of the first binder may be 40 °C to 60 °C.

In one embodiment of the separator, $D_{B1}$ may be 1.2 $\mu$m or more.

In one embodiment of the separator, the first binder may comprise at least one selected from the group consisting of polyvinylidene fluoride (PVdF), polyvinylidene fluoride-hexafluoropropylene (PVdF-HFP), polyacrylonitrile (PAN), polybutyl acrylate (PBA), polyethylhexyl acrylate (PEHA), styrene-butadiene rubber (SBR), and polyethylene oxide (PEO); or a copolymer of any two or more thereof.

In one embodiment of the separator, $T_C$ may be 1 $\mu$m to 20 $\mu$m.

In one embodiment of the separator, the coating layer may further comprise a second binder.

In one embodiment of the separator, the inorganic material and the second binder may be included in a weight ratio of 60-99 : 40-1.

In one embodiment of the separator, based on the total weight of the inorganic material and the second binder, the first binder may be included in an amount of 1 wt% to 30 wt%.

As a technical means to achieve the technical objects, a method for manufacturing a separator according to the present disclosure comprises: preparing a substrate; applying a separator coating slurry to at least one surface of the substrate; and curing the applied separator coating slurry to form a coating layer on at least one surface of the substrate, wherein the separator coating slurry may comprise the inorganic material and the first binder.

In one embodiment of the method for manufacturing the separator, the separator coating slurry may further comprise a second binder.

In one embodiment of the method for manufacturing the separator, the separator coating slurry may comprise the first binder in an amount of 1 wt% to 30 wt% based on the total weight of the inorganic material and the second binder.

As a technical means to achieve the technical objects, an electrode assembly according to the present disclosure comprises: a positive electrode; a negative electrode; and the separator according to the present disclosure disposed between the positive electrode and the negative electrode, wherein at least a portion of the first binder is in contact with both the substrate and the positive electrode, or in contact with both the substrate and the negative electrode.

According to one aspect of the present disclosure, a separator can be provided that achieves sufficient fusibility while minimizing the content of the binder used for fusing between the electrodes and the separator, and further exhibits excellent mechanical, structural, and thermal stability.

According to another aspect of the present disclosure, a method for manufacturing a separator can be provided that has excellent processability and manufacturing economy.

According to another aspect of the present disclosure, an electrode assembly can be provided that exhibits excellent fusibility between the electrodes and the separator, as well as superior resistance characteristics, lifespan, safety, and mechanical, structural, and thermal stability.

According to another aspect of the present disclosure, a method for manufacturing an electrode assembly can be provided that has excellent processability and manufacturing economy.

Meanwhile, the present disclosure can be widely applied in green technology fields, including electric vehicles (EVs), battery charging stations (BCSs), energy storage systems (ESSs), and other battery-utilizing systems such as photovoltaics and wind power. Furthermore, the present disclosure can be applied to eco-friendly mobility, including electric vehicles (EVs) and hybrid vehicles, to suppress air pollution and greenhouse gas emissions, thereby contributing to climate change mitigation.

BRIEF DESCRIPTION OF THE DRAWINGS

FIG. 1 is a view illustrating an example of a
separator according to one embodiment of the present disclosure.
FIG. 2 is a flow diagram illustrating an example of a method for manufacturing a separator according to one embodiment of the present disclosure.

DETAILED DESCRIPTION

The embodiments described in this specification may be modified into various other forms, and thus the technology according to one embodiment is not limited to the embodiments described below. Furthermore, unless explicitly stated otherwise, when any component in this specification is described as "comprising," "including," "containing," or "having," it does not exclude the presence of other components but may include additional components, and does not exclude elements, materials, or processes that are not explicitly listed.

Unless otherwise specified, "the same" or "uniform" in this specification may mean being identical or uniform within an allowable range of error. For example, when components or measured property values are described as being the same, this may include cases where the two objects being compared are not completely identical but are identical within an acceptable error range. In particular, identical measured property values may indicate that the difference between measured values of the objects is approximately less than 5%, specifically less than 3%, or more specifically less than 1%.

Angles between two objects described as perpendicular, parallel, or aligned in this specification may include cases where the objects are geometrically perpendicular or parallel, as well as cases where they are within a small allowable deviation.

Numerical ranges used in this specification include the lower and upper limits, all values within the range, increments logically derived from the defined range and width, any doubly limited values, and all possible combinations of upper and lower limits of numerical ranges defined in different ways. Unless specifically defined, "about" in this specification may refer to values within 30%, 25%, 20%, 15%, 10%, or 5% of the stated value.

Use of terms such as "first," "second," or "third" before any component in this specification is intended merely to distinguish the referenced components and is unrelated to the order, importance, or hierarchical relationship of the components. For example, an invention including only the second component without the first component is also possible.

The terms "D10," "D50," or "D90" used in this specification may refer to particle diameters corresponding to 10%, 50%, and 90% of cumulative volume, respectively, in a particle size distribution measured by laser scattering.

The term "secondary battery" used in this specification may refer to a battery that generates electrical energy via oxidation-reduction reactions occurring when metal ions, specifically lithium ions or other cations, are intercalated and deintercalated at the positive and negative electrodes. Specifically, the "secondary battery" may include any one of a lithium cobalt battery, lithium high-nickel battery, lithium iron phosphate battery, lithium-ion battery, lithium polymer battery, lithium-sulfur battery, nickel-metal hydride battery, nickel-cadmium battery, sodium battery, or all-solid-state battery. More specifically, the term "secondary battery" used in this specification may refer to a lithium-ion secondary battery, but is not necessarily limited thereto.

The present disclosure will now be described in detail; however, the following description is merely illustrative and does not limit the disclosure to the particular embodiments described.

## Separator

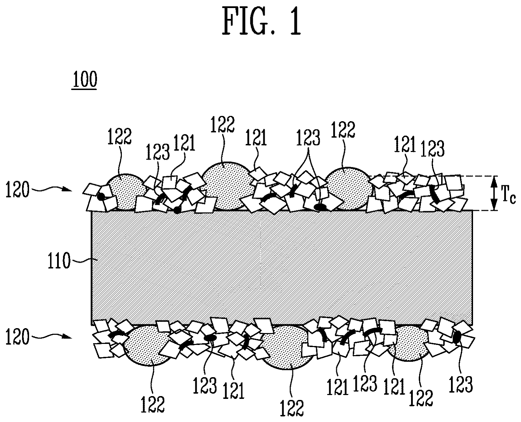

FIG. 1 is a view illustrating an example of a separator according to one embodiment of the present disclosure.

Referring to FIG. 1, the separator 100 according to one aspect of the present disclosure comprises a substrate 110 and a coating layer 120 formed on at least one surface of the substrate 110. The coating layer 120 comprises an inorganic material 121 and a first binder 122, and the glass transition temperature of the first binder 122 is 100 °C or less. The separator can satisfy the following Equation 1:

[Equation 1]

$$1.2 \leq D_{B1}/T_C \leq 2.0$$

In Equation 1, $D_{B1}$ is a particle diameter (D50) at a volume fraction of 50% in a cumulative particle size distribution of the first binder 122, and $T_C$ is the thickness of the coating layer 120.

In a specific embodiment, the $D_{B1}/T_C$ value may be 1.21 or more, 1.22 or more, 1.23 or more, 1.24 or more, 1.25 or more, 1.26 or more, 1.27 or more, 1.28 or more, 1.29 or more, 1.30 or more, 1.31 or more, 1.32 or more, 1.33 or more, 1.34 or more, 1.35 or more, 1.36 or more, 1.37 or more, 1.38 or more, or 1.39 or more; or 1.99 or less, 1.98 or less, 1.97 or less, 1.96 or less, 1.95 or less, 1.94 or less, 1.93 or less, 1.92 or less, 1.91 or less, 1.90 or less, 1.89 or less, 1.88 or less, 1.87 or less, 1.86 or less, 1.85 or less, 1.84 or less, 1.83 or less, 1.82 or less, or 1.81 or less.

In one embodiment, the separator 100 may further satisfy the following Equation 2:

[Equation 2]

$$1.4 \leq D_{B1}/T_C \leq 1.8$$

In Equation 2, $D_{B1}$ and $T_C$ are as defined above.

Referring to FIG. 1, in one embodiment, at least a portion of the first binder 122 may be in contact with the substrate 110 while at least a portion is exposed to the outside.

In an exemplary embodiment, the entirety of the first binder 122 may be in contact with the substrate 110 while at least a portion is exposed to the outside.

In such embodiments, the first binder 122 may have a D50 value larger than the thickness of the coating layer 120. In these embodiments, at least a portion of the first binder 122 may contact the substrate 110 on one side, while at least a portion of the remaining parts, excluding that side, may be exposed to the outside. That is, in such embodiments, the portion exposed to the outside may be defined as the part of the first binder 122 protruding from the surface of the coating layer 120. This definition applies both when at least a portion of the first binder 122 is arranged on the coating layer 120 in the above manner, and when the entirety of the first binder 122 is so arranged.

If the $D_{B1}/T_C$ value is below the above-described numerical range, the effect of improving fusibility between the separator 100 and the electrodes due to the thermally fusible first binder 122 during electrode assembly manufacturing may be minimal. Conversely, if the $D_{B1}/T_C$ value exceeds the above numerical range, the first binder 122 may be too large, reducing adhesion between the separator 100 and the electrode interface during electrode assembly manufacturing, which may lead to decreased battery performance and safety.

Meanwhile, the shapes, sizes, colors, thicknesses, shading, widths, and other characteristics of the components illustrated in FIG. 1 are arbitrarily shown for convenience of explanation and may be variously configured as needed without departing from the definitions in the disclosure. Accordingly, the claims are not limited by these illustrations.

Referring again to FIG. 1, in one embodiment, the separator 100 may include a substrate 110.

In one embodiment, the substrate 110 may be configured to prevent physical short circuits between electrodes while allowing ion flow. The separator 100 may be made of a material that can melt when exposed to high temperatures.

In one embodiment, the substrate 110 may comprise at least one of a porous polymer and a porous nonwoven fabric.

In an exemplary embodiment, the porous polymer film may include polyolefin-based polymers such as ethylene homopolymers, propylene homopolymers, ethylene/butene copolymers, ethylene/hexene copolymers, and ethylene/-methacrylate copolymers. The porous nonwoven fabric may include high-melting-point glass fibers or polyethylene terephthalate (PET) fibers. The separator may have a single-layer or multilayer structure comprising the above-described polymer film and/or nonwoven fabric.

In one embodiment, the thickness of the substrate 110 may be 1 μm to 100 μm. In a specific embodiment, the thickness of the substrate 110 may be 2 μm or more, 3 μm or more, or 4 μm or more; or 90 μm or less, 80 μm or less, 70 μm or less, 60 μm or less, or 50 μm or less. In an exemplary embodiment, the thickness of the substrate 110 may be 5 μm to 30 μm, but is not necessarily limited thereto.

In one embodiment, the coating layer 120 may be formed on at least one surface of the substrate 110. In an exemplary embodiment, the coating layer 120 may be formed on only one surface of the substrate 110 or on both surfaces of the substrate 110.

In one embodiment, the coating layer 120 may comprise an inorganic material 121.

In one embodiment, the inorganic material 121 may be included in the coating layer 120 in the form of particles. The inorganic material 121 may be rigid, such that it is not deformed or only slightly deformed by external impact or mechanical force. Furthermore, the inorganic material 121 may exhibit high thermal and/or chemical stability, so that thermal deformation at high temperatures is not observed or only minimal, and side reactions with components in the secondary battery, such as the electrolyte, are not observed or only minimal.

By including the inorganic material 121 in the coating layer 120 as described above, thermal shrinkage of the substrate 110 in high-temperature environments can be prevented. At the same time, the heat resistance and chemical stability of the separator 100 can be improved, thereby enhancing battery stability and safety, and further improving the electrical properties of the battery.

In one embodiment, the particle size of the inorganic material 121 may be 0.1 $\mu$m to 2.0 $\mu$m, but is not necessarily limited thereto. The particle size may refer to the D50 value according to the cumulative particle size distribution, as described above.

In such an embodiment, the relationship 0.1 $\mu$m $\leq D_I \leq$ 2.0 $\mu$m may be satisfied, where $D_I$ represents the particle size of the inorganic material 121.

In one embodiment, the inorganic material 121 may comprise at least one selected from the group consisting of alumina, boehmite, aluminum hydroxide, titanium oxide, magnesium oxide, magnesium hydroxide, silicon oxide, clay, and glass powder.

In one embodiment, the coating layer 120 may comprise a first binder 122.

In one embodiment, the first binder 122 may at least partially melt, undergo a phase change, or experience partial physical property alteration when heat within a predetermined temperature range is applied, and upon returning to room temperature or upon removal of the heat, adhesion or fusibility to contacting components may be ensured. In other words, in such an embodiment, the first binder 122 may exhibit thermal fusibility.

In one embodiment, the first binder 122 may be flexible.

By including the first binder 122 in the coating layer 120 as described above, adhesion or fusibility between the separator 100 and electrodes in an electrode assembly comprising a positive electrode and a negative electrode, as described below, can be provided.

In one embodiment, the glass transition temperature (Tg) of the first binder 122 may be 100 °C or less.

In one embodiment, the glass transition temperature of the first binder 122 may be 40 °C to 60 °C. If the Tg of the first binder 122 is below the above range, it may become too tacky, causing the material to stick together when rolled, making it difficult to handle. If the Tg exceeds the above range, when thermal fusibility is performed using heat within a temperature range (80-100 °C) that does not cause thermal deformation of the separator substrate 110, sufficient adhesion or fusibility may not be obtained.

In a specific embodiment, the Tg of the first binder 122 may be 45 °C to 55 °C.

In one embodiment, $D_{B1}$ may be 1.2 $\mu$m or more.

In a specific embodiment, $D_{B1}$ may be 1.2 $\mu$m to 40 $\mu$m.

If the $D_{B1}$ value is below the above range, the effect of improving adhesion between the separator 100 and the electrodes due to the thermally fusible first binder 122 during electrode assembly manufacturing may be minimal. Conversely, if the $D_{B1}$ value exceeds the above range, the size of the first binder 122 may be too large, reducing adhesion at the interface between the separator 100 and the electrodes during electrode assembly manufacturing, which may lead to decreased battery performance and safety.

In one embodiment, the first binder 122 may comprise at least one selected from the group consisting of polyvinylidene fluoride (PVdF), polyvinylidene fluoride-hexafluoropropylene (PVdF-HFP), polyacrylonitrile (PAN), polybutyl acrylate (PBA), polyethylhexyl acrylate (PEHA), styrene-butadiene rubber (SBR), and polyethylene oxide (PEO); or a copolymer of any two or more thereof.

Referring again to FIG. 1, in one embodiment, $T_C$ may be 1 $\mu$m to 20 $\mu$m. That is, the thickness of the coating layer 120 may be 1 $\mu$m to 20 $\mu$m. In a specific embodiment, $T_C$ may be 1 $\mu$m to 10 $\mu$m.

Referring to FIG. 1, the thickness of the coating layer 120, i.e., $T_C$, may refer to the average thickness of the coating layer 120 in regions excluding areas where the first binder 122 is present. Specifically, it may refer to the average thickness of the coating layer 120 in regions excluding areas where the first binder 122 protrudes.

If the thickness of the coating layer 120 is below the above range, the improvement in heat resistance or rigidity due to formation of the coating layer 120 may be minimal. Conversely, if the thickness exceeds the above range, the electrical properties of the battery may deteriorate, or processability may be adversely affected.

Referring again to FIG. 1, in one embodiment, the coating layer 120 may further comprise a second binder 123.

In one embodiment, the second binder 123 may be included in the coating layer 120 to promote adhesion between the inorganic material 121 and the substrate 110, or between the inorganic material 121 particles themselves. In such an embodiment, the first binder 122, as described above, may be primarily included to ensure adhesion between the separator 100 and electrodes in an electrode assembly, while the second binder 123 may be primarily included to provide adhesion between the inorganic material 121 and the substrate 110 and/or between inorganic material particles within the coating layer 120. However, this is not necessarily limiting, as the first binder 122 may also partially contribute to inorganic particle-substrate or particle-particle adhesion, and the second binder 123 may also partially contribute to adhesion between the separator 100 and electrodes.

In one embodiment, 90 wt% or more of the second binder 123 included in the coating layer 120 may not be exposed to the outside. In a specific embodiment, 91 wt% or more, 92 wt% or more, 93 wt% or more, 94 wt% or more, 95 wt% or more, 96 wt% or more, 97 wt% or more, 98 wt% or more, 99 wt% or more, or 99.9 wt% or more of the second binder 123 may not be exposed to the outside.

In one embodiment, the second binder 123 may include at least one selected from the group consisting of acrylic polymers, cellulose-based polymers, and butadiene-based polymers. However, this is not limiting, and any binder commonly used in the art for adhesion between particles may be used as needed.

In one embodiment, the inorganic material 121 and the second binder 123 may be included in a weight ratio of 60~99 : 40-1. That is, in such an embodiment, the weight ratio of the inorganic material 121 to the second binder 123 in the coating layer 120 may be 60:40 to 99:1.

If the content of the inorganic material 121 is below the above weight ratio, the amount of the second binder 123 may be excessive, reducing porosity and pore size due to decreased voids between inorganic particles, which may deteriorate battery performance. Conversely, if the content of the inorganic material 121 exceeds the above weight ratio, adhesion between the inorganic particles or between the inorganic particles and the substrate 110 may decrease, reducing the structural stability of the separator 100.

In one embodiment, based on the total weight of the inorganic material 121 and the second binder 123, the first binder 122 may be included in an amount of 1 wt% to 30 wt%. That is, in one embodiment, the first binder 122 may be included in an amount of 1 wt% to 30 wt% relative to the total solid content of the inorganic material 121 and the second binder 123 in the coating layer 120.

In a specific embodiment, the first binder 122 may be included at 1.3 wt% or more, 1.5 wt% or more, 1.7 wt% or more, 2 wt% or more, 2.2 wt% or more, or 2.5 wt% or more, or at 29 wt% or less, 28 wt% or less, 27 wt% or less, 26 wt% or less, or 25 wt% or less relative to the total weight.

If the content of the first binder 122 is below the above range, the effect of securing adhesion or fusibility between the separator 100 and electrodes may be minimal. If it exceeds the above range, although adhesion or fusibility may be sufficiently secured, pore blockage due to electrolyte swelling of the first binder 122, increased battery resistance, and deterioration of safety may occur, and processability and manufacturing economy may also be adversely affected.

In a specific embodiment, the first binder 122 may be included in an amount of 5 wt% to 20 wt% based on the total weight of the inorganic material 121 and the second binder 123.

In such an embodiment, the separator 100 may comprise the substrate 110 and a coating layer 120 formed on at least one surface of the substrate 110. The coating layer 120 may comprise the inorganic material 121 and the first binder 122, and may further comprise the second binder 123.

In such an embodiment, at least a portion of the first binder 122 may be exposed to the outside. That is, when viewed from the exterior of the separator 100, at least a portion of the first binder 122 may protrude from the surface of the coating layer 120. In this embodiment, at least a portion of the first binder 122 exposed to the outside may be in contact with the substrate 110 on the opposite side.

In such an embodiment, the separator 100 may be structurally, mechanically, thermally, and chemically stable. At the same time, it may exhibit excellent electrical properties, provide strong adhesion or fusibility between the electrodes and the separator 100 in an electrode assembly, and maintain good contact at the interface between the electrodes and the separator 100.

## Method for Manufacturing the Separator

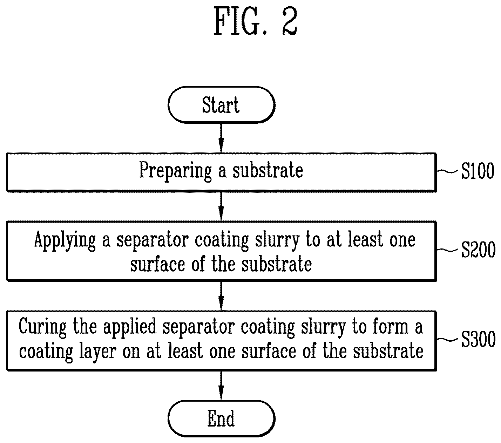

FIG. 2 is a flow diagram illustrating an example of a method for manufacturing a separator according to one embodiment of the present disclosure.

Referring to FIG. 2, a method for manufacturing a separator according to one aspect of the present disclosure comprises, as a method for manufacturing the separator according to one aspect of the present disclosure: a step of preparing a substrate S100; a step of applying a separator coating slurry to at least one surface of the substrate S200; and a step of curing the applied separator coating slurry to form a coating layer on at least one surface of the substrate S300, wherein the separator coating slurry may comprise the inorganic material and the first binder.

In one embodiment, the S100 step may refer to preparing the substrate. The detailed description of the substrate may be as described with reference to FIG. 1, and the same explanation applies, so redundant description is omitted herein.

In one embodiment, the S200 step may refer to applying the separator coating slurry to at least one surface of the substrate prepared in step S100.

In one embodiment, the separator coating slurry may comprise the inorganic material and the first binder. The detailed description of the inorganic material and first binder may be as described with reference to FIG. 1, and the same explanation applies, so redundant description is omitted herein.

The separator coating slurry may be prepared by dispersing and mixing the inorganic material and the first binder in a suitable solvent. In an exemplary embodiment, the solvent may include water, methanol, ethanol, propanol, acetone, tetrahydrofuran, methyl ethyl ketone, ethyl acetate, N-methylpyrrolidone, dimethyl acetamide, dimethylformamide, diethylformamide, and the like. However, this is not necessarily limiting, and any solvent known in the art suitable for dispersing and dissolving the inorganic material and first binder may be used without restriction.

In one embodiment, the separator coating slurry may further comprise a second binder. The detailed description of the second binder may be as described with reference to FIG. 1, and the same explanation applies, so redundant description is omitted herein.

In one embodiment, based on the total weight of the inorganic material and the second binder, the separator coating slurry may include the first binder in an amount of 1 wt% to 30 wt%. That is, in one embodiment, the first binder may be included in an amount of 1 wt% to 30 wt% relative to the total solid content of the inorganic material and the second binder in the separator coating slurry.

In a specific embodiment, the first binder may be included at 1.3 wt% or more, 1.5 wt% or more, 1.7 wt% or more, 2 wt% or more, 2.2 wt% or more, or 2.5 wt% or more, or at 29 wt% or less, 28 wt% or less, 27 wt% or less, 26 wt% or less, or 25 wt% or less relative to the total weight.

If the content of the first binder is below the above-described range, the effect of securing adhesion or fusibility between the separator and electrodes during coating layer formation may be minimal. Conversely, if the content exceeds the above range, although a high degree of adhesion or fusibility may be obtained, pore blockage due to electrolyte swelling of the first binder, increased battery resistance, and deterioration of safety may occur, and processability and manufacturing economy may also be adversely affected.

In a specific embodiment, based on the total weight of the inorganic material and the second binder, the first binder may be included in an amount of 5 wt% to 20 wt%.

In one embodiment, the S200 step may be carried out using bar coating, gravure coating, dip coating, slot-die coating, multi-layer simultaneous die coating, imprinting, doctor blade coating, casting, or the like, but is not limited thereto. Any suitable method known in the art may be employed as necessary.

In one embodiment, the S300 step may refer to curing the separator coating slurry applied in the S200 step. By the S300 step, the coating layer may be formed on at least one surface of the substrate. The S300 step may include drying the applied separator coating slurry. The drying may be performed by known methods such as air drying, hot-air drying, laser drying, or heated drying, without limitation, and the drying temperature and time may be appropriately selected.

By employing the above-described manufacturing method, the method for manufacturing the separator according to one aspect of the present disclosure can simplify the process compared to the conventional method of first coating and drying a heat-resistant layer and then separately coating a thermal fusible layer, thereby improving processability and manufacturing economy.

## Electrode Assembly

An electrode assembly according to one aspect of the present disclosure comprises: a positive electrode; a negative electrode; and a separator according to one aspect of the present disclosure disposed between the positive electrode and the negative electrode, wherein at least a portion of the first binder may be in contact with both the substrate and the positive electrode, or in contact with both the substrate and the negative electrode.

In one embodiment, the positive electrode may comprise a positive electrode current collector and a positive electrode active material layer formed on at least one surface of the positive electrode current collector.

In one embodiment, the positive electrode current collector may include a conductive material known in the art that does not undergo chemical reactions within the secondary battery.

In an exemplary embodiment, non-limiting examples of the positive electrode current collector include stainless steel, nickel, aluminum, titanium, or alloys thereof. The positive electrode current collector may also include aluminum or stainless steel surface-treated with carbon, nickel, titanium, or silver. A thickness of the positive electrode current collector is not limited thereto; for example, it may have a thickness of 10 to 50 $\mu$m.

In one embodiment, the positive electrode active material layer may comprise a positive electrode active material. The positive electrode active material may include a compound capable of reversibly intercalating and deintercalating metal ions, specifically lithium ions.

The positive electrode active material may include lithium-nickel metal oxides. The lithium-nickel metal oxide may further comprise at least one of cobalt (Co), manganese (Mn), and aluminum (Al).

In some embodiments, the positive electrode active material or the lithium-nickel metal oxide may include a layered structure or crystal structure represented by the following Chemical Formula 1:

[Chemical Formula 1]     $Li_xNi_aM_bO_{2+z}$

In Chemical Formula 1, $0.9 \leq x \leq 1.2$, $0.6 \leq a \leq 0.99$, $0.01 \leq b \leq 0.4$, and $-0.5 \leq z \leq 0.1$. As described above, M may include Co, Mn, and/or Al.

The chemical structure represented by Chemical Formula 1 indicates bonding relationships included within the layered or crystal structure of the positive electrode active material and does not exclude other additional elements. For example, M may include Co and/or Mn, and Co and/or Mn may be provided as main active elements together with Ni in the positive electrode active material. Chemical Formula 1 is provided to express the bonding relationship of the main active elements and should be understood to encompass the introduction and substitution of additional elements.

In one embodiment, auxiliary elements may be further included in addition to the main active elements to enhance the chemical stability of the positive electrode active material or the layered/crystal structure. These auxiliary elements may be co-incorporated into the layered/crystal structure to form bonds, and such inclusion is also considered to fall within the chemical structure range represented by Chemical Formula 1.

The auxiliary elements may include at least one selected from Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. For example, an auxiliary element such as Al may act together with Co or Mn as an auxiliary active element contributing to the capacity/output activity of the positive electrode active material.

For example, the positive electrode active material or the lithium-nickel metal oxide may include a layered or crystal structure represented by the following Chemical Formula 1-1:

$$[\text{Chemical Formula 1-1}] \qquad Li_xNi_aM1_{b1}M2_{b2}O_{2+z}$$

In Chemical Formula 1-1, M1 may include Co, Mn, and/or Al, and M2 may include the auxiliary elements described above. In Chemical Formula 1-1, $0.9 \leq x \leq 1.2$, $0.6 \leq a \leq 0.99$, $0.01 \leq b1 + b2 \leq 0.4$, and $-0.5 \leq z \leq 0.1$.

The positive electrode active material may further comprise coating elements or doping elements. For example, elements substantially identical or similar to the above-described auxiliary elements may be used as coating or doping elements. One or more of the above elements may be used individually or in combination as the coating or doping element.

The coating or doping elements may exist on the surface of the lithium-nickel metal oxide particles or may penetrate through the surface of the lithium-nickel metal oxide particles to be incorporated into the bonding structure represented by Chemical Formula 1 or Chemical Formula 1-1.

The positive electrode active material may include Ni-Co-Mn (NCM)-type lithium oxides. In this case, NCM lithium oxides with increased nickel content may be used.

Ni may be provided as a transition metal related to the output and capacity of the lithium secondary battery. Accordingly, by employing a high-Ni composition in the positive electrode active material as described above, a high-capacity positive electrode and a high-capacity secondary battery can be provided.

However, as the Ni content increases, long-term stability and lifespan stability of the positive electrode or the secondary battery may decrease, and side reactions with the electrolyte may increase. In exemplary embodiments, including Co may maintain electrical conductivity, and Mn may improve lifespan stability and capacity retention characteristics.

The Ni content in the NCM lithium oxide (i.e., the molar fraction of nickel among the total moles of nickel, cobalt, and manganese) may be 0.6 or more, 0.7 or more, or 0.8 or more. In some embodiments, the Ni content may be 0.8 to 0.95, 0.82 to 0.95, 0.83 to 0.95, 0.84 to 0.95, 0.85 to 0.95, or 0.88 to 0.95.

In some embodiments, the positive electrode active material may include lithium cobalt oxide-based active materials, lithium manganese oxide-based active materials, lithium nickel oxide-based active materials, or lithium iron phosphate (LFP)-based active materials, such as $LiFePO_4$.

The positive electrode active material layer may further comprise a binder and a conductive material. As needed, the positive electrode active material layer may also include a thickening agent. In some embodiments, the binder may include polyvinylidene fluoride (PVdF), polyvinylidene fluoride-hexafluoropropylene (PVdF-HFP), polyacrylonitrile (PAN), polymethyl methacrylate (PMMA), or butadiene rubber. In one embodiment, a PVdF-based binder may be used as the positive electrode binder.

The conductive material may be added to enhance the conductivity of the positive electrode active material layer and/or the mobility of lithium ions or electrons. For example, the conductive material may include carbon-based materials such as graphite, carbon black, acetylene black, Ketjen black, graphene, carbon nanotubes (CNTs), vapor-grown carbon fibers (VGCF), or carbon fibers; and/or metal-based conductive materials including tin, tin oxide, titanium oxide, or perovskite materials such as LaSrCoO3 or LaSrMnO3, but is not limited thereto.

As needed, the positive electrode active material layer may further include known thickeners and/or dispersants.

In one embodiment, the negative electrode may comprise a negative electrode current collector and a negative electrode active material layer formed on at least one surface of the negative electrode current collector.

Non-limiting examples of the negative electrode current collector include copper foil, nickel foil, stainless steel foil, titanium foil, nickel foam, copper foam, or polymer substrates coated with a conductive metal. The negative electrode current collector is not limited thereto, and for example, may have a thickness of 10 $\mu$m to 50 $\mu$m.

In one embodiment, the negative electrode active material layer may comprise a negative electrode active material.

Exemplary negative electrode active materials include materials capable of absorbing and desorbing lithium ions, such as carbon-based materials (crystalline carbon, amorphous carbon, carbon composites, carbon fibers), lithium metal, lithium alloys, silicon-containing materials, or tin-containing materials.

Examples of amorphous carbon include hard carbon, soft carbon, coke, mesocarbon microbeads (MCMB), and mesophase pitch-based carbon fibers (MPCF).

Examples of crystalline carbon include natural graphite, artificial graphite, graphitized coke, graphitized MCMB, and graphitized MPCF.

The lithium metal may be pure lithium metal or lithium metal with a protective layer formed to suppress dendrite growth.

Elements included in lithium alloys may include aluminum, zinc, bismuth, cadmium, antimony, silicon, lead, tin, gallium, or indium.

Silicon-containing materials may provide increased capacity characteristics. Silicon-containing materials may include Si, SiOx (0 < x < 2), metal-doped SiOx (0 < x < 2), or silicon-carbon composites. The metals may include lithium and/or magnesium, and metal-doped SiOx (0 < x < 2) may include metal silicates.

Non-limiting examples of solvents for the negative electrode active material include water, pure water, deionized water, distilled water, ethanol, isopropanol, methanol, acetone, n-propanol, or t-butanol.

In one embodiment, the negative electrode active material layer may further comprise a binder and, optionally, additives such as a conductive material, thickening agent, or dispersant.

In an exemplary embodiment, any binder exhibiting good adhesion to the positive and/or negative electrode current collectors may be used without limitation. In some embodiments, the binder may include rubber-based binders, cellulose-based binders, polyacrylic acid-based binders, poly(3,4-ethylenedioxythiophene) (PEDOT)-based binders, polyvinylidene fluoride (PVdF), polyvinylidene fluoride-hexafluoropropylene (PVdF-HFP), or polymethyl methacrylate (PMMA).

The conductive material may be added to enhance conductivity of the negative electrode active material layer and/or the mobility of lithium ions or electrons. For example, the conductive material may include carbon-based materials such as graphite, carbon black, acetylene black, Ketjen black, graphene, single-walled carbon nanotubes (SWCNT), multi-walled carbon nanotubes (MWCNT), vapor-grown carbon fibers (VGCF), or carbon fibers; and/or metal-based conductive materials such as tin, tin oxide, titanium oxide, or perovskite materials like $LaSrCoO_3$ or $LaSrMnO_3$, without limitation.

In an exemplary embodiment, thickeners may include carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or cellulose gum.

In one embodiment, at least a portion of the first binder included in the coating layer of the separator may be in contact with both the substrate and the positive electrode, or with both the substrate and the negative electrode.

In one embodiment, at least a portion of the first binder may be in contact with the substrate and the positive electrode.

In one embodiment, at least a portion of the first binder may be in contact with the substrate and the negative electrode.

In one embodiment, the entirety of the first binder in the coating layer may be in contact with both the substrate and the positive electrode, or with both the substrate and the negative electrode.

In an exemplary embodiment, when viewed from the outside, at least a portion of the first binder may protrude from the surface of the coating layer, and at least a portion of the first binder exposed to the outside may be in contact with the substrate on the opposite side, as described above.

The separator may be disposed between the positive and negative electrodes. Accordingly, the portion of the first binder exposed to the outside, i.e., the portion protruding from the outer surface of the coating layer, may be in contact with either the positive electrode or the negative electrode.

In such embodiments, the first binder may be in contact with both the positive electrode and the substrate, or with both the negative electrode and the substrate within the electrode assembly.

As described above, the first binder may exhibit thermal fusibility. Accordingly, in one embodiment, the first binder may adhere to both the positive electrode and the substrate, or to both the negative electrode and the substrate within the electrode assembly. In other words, in such embodiments, each portion of the first binder may function as a means for adhering the positive electrode to the substrate or the negative electrode to the substrate.

Such embodiments can significantly improve adhesion or fusibility between the positive or negative electrode and the separator in the electrode assembly. At the same time, effective adhesion or fusibility can be achieved even with a low content of the first binder, thereby preventing problems associated with first binder use, such as pore blockage due to electrolyte swelling, increased battery resistance, deterioration of safety, and reduced processability or manufacturing economy.

In one embodiment, the electrode assembly may be manufactured by a method comprising: inserting a separator according to one aspect of the present disclosure between the positive and negative electrodes; and applying heat and pressure to the unit in which the separator is interposed between the positive and negative electrodes to achieve fusion.

The fusing step may be carried out at a temperature of 80 °C to 120 °C, for 60 to 180 seconds, applying a pressure of 10 kgf/cm$^2$ to 30 kgf/cm$^2$ along the stacking direction; however, this is not necessarily limiting.

In some embodiments, the electrode assembly may be of a winding type, stacking type, z-folding type, or stack-folding type.

In an exemplary embodiment where the electrode assembly is of the stacking type, the assembly may include 2 to 60 positive electrodes and 2 to 60 negative electrodes along the stacking direction, with separators interposed between the positive and negative electrodes along the stacking direction, but this is not limiting.

An electrode assembly according to one aspect of the present disclosure may be included as a component of a secondary battery.

In one embodiment, the secondary battery may comprise: an electrode assembly according to one aspect of the present disclosure; an exterior casing accommodating the electrode assembly; and an electrolyte accommodated together with the electrode assembly within the exterior casing.

In one embodiment, the exterior casing may include an internal receiving space configured to isolate the objects within from the external environment. The electrode assembly may be accommodated and sealed within the receiving space of the exterior casing.

The exterior casing may be appropriately selected as a pouch-type, can-type, or coin-type casing as needed.

In one embodiment, the electrolyte may be accommodated together with the electrode assembly within the exterior casing. Specifically, the electrolyte may be contained in the receiving space of the exterior casing together with the electrode assembly and may contact at least a portion of the electrode assembly within the receiving space.

In one embodiment, the electrolyte may provide a path for ion transport.

In exemplary embodiments, a non-aqueous electrolyte may be used as the electrolyte.

The non-aqueous electrolyte may include a lithium salt and an organic solvent. The lithium salt may, for example, be represented as Li$^+$X$^-$, where the anion (X$^-$) may include, without limitation, F$^-$, Cl$^-$, Br$^-$, I$^-$, NO$_3^-$, N(CN)$_2^-$, BF$_4^-$, ClO$_4^-$, PF$_6^-$, (CF$_3$)$_2$PF$_4^-$, (CF$_3$)$_3$PF$_3^-$, (CF$_3$)$_4$PF$_2^-$, (CF$_3$)$_5$PF$^-$, (CF$_3$)$_6$P$^-$, CF$_3$SO$_3^-$, (CF$_3$SO$_2$)$_2$N$^-$, (FSO$_2$)$_2$N$^-$, CF$_3$C(CF$_3$)$_2$CO$^-$, (CF$_3$SO$_2$)$_2$CH$^-$, (SF$_5$)$_3$C$^-$, (CF$_3$SO$_2$)$_3$C$^-$, CF$_3$(CF$_2$)$_7$SO$_3^-$, CF$_3$CO$_2^-$, CH$_3$CO$_2^-$, SCN$^-$, and (CF$_3$CF$_2$SO$_2$)$_2$N$^-$.

The organic solvent may include organic compounds that provide sufficient solubility for the lithium salt and any additives, and that do not react within the battery. Examples of the organic solvent include at least one selected from carbonate-based solvents, ester-based solvents, ether-based solvents, ketone-based solvents, alcohol-based solvents, and non-protic solvents.

The non-aqueous electrolyte may further include additives. Examples of such additives include cyclic carbonate compounds, fluorine-substituted carbonate compounds, sulfone compounds, cyclic sulfate compounds, cyclic sulfite compounds, phosphate compounds, and borate compounds.

A secondary battery according to one aspect of the present disclosure may be preferably used as a battery cell for powering small devices, as well as a unit cell for battery modules and/or battery packs of medium- or large-scale devices including a plurality of battery cells. Examples of small devices include mobile phones, laptop computers, and cameras. Examples of medium- or large-scale devices include electric vehicles, hybrid electric vehicles, plug-in hybrid electric vehicles, and energy storage systems, but the disclosure is not limited thereto.

It is understood by those skilled in the art that the plurality of exemplary embodiments described above are specific examples of the following aspects.

Aspect 1: A separator comprising: a substrate; and a coating layer formed on at least one surface of the substrate, wherein the coating layer comprises an inorganic material and a first binder, a glass transition temperature of the first binder is 100 °C or less, and the separator satisfies the following Equation 1:

[Equation 1]

$$1.2 \leq D_{B1}/T_C \leq 2.0$$

In Equation 1, $D_{B1}$ is a particle diameter (D50) at a volume fraction of 50% in a cumulative particle size distribution of the first binder, and $T_C$ is a thickness of the coating layer.

Aspect 2: The separator according to aspect 1, wherein the separator further satisfies the following Equation 2:

[Equation 2]

$$1.4 \leq D_{B1}/T_C \leq 1.8$$

In Equation 2, $D_{B1}$ and $T_C$ are as defined in aspect 1.

Aspect 3: The separator according to aspect 1 or 2, wherein at least a portion of the first binder is in contact with the substrate while at least a portion thereof is exposed to the outside.

Aspect 4: The separator according to any one of aspects 1 to 3, wherein the substrate comprises at least one of a porous polymer and a porous nonwoven fabric.

Aspect 5: The separator according to any one of aspects 1 to 4, wherein the glass transition temperature of the first binder is 40 °C to 60 °C.

Aspect 6: The separator according to any one of aspects 1 to 5, wherein the $D_{B1}$ is 1.2 $\mu$m or more.

Aspect 7: The separator according to any one of aspects 1 to 6, wherein the first binder comprises at least one selected from the group consisting of polyvinylidene fluoride (PVdF), polyvinylidene fluoride-hexafluoropropylene (PVdF-HFP), polyacrylonitrile (PAN), polybutyl acrylate (PBA), polyethylhexyl acrylate (PEHA), styrene-butadiene rubber (SBR), and polyethylene oxide (PEO); or a copolymer of any two or more thereof.

Aspect 8: The separator according to any one of aspects 1 to 7, wherein the $T_C$ is 1 $\mu$m to 20 $\mu$m.

Aspect 9: The separator according to any one of aspects 1 to 8, wherein the coating layer further comprises a second binder.

Aspect 10: The separator according to aspect 9, wherein the inorganic material and the second binder are contained in a weight ratio of 60~99 : 40-1.

Aspect 11: The separator according to aspect 9 or 10, wherein the first binder is included in an amount of 1 wt% to 30 wt% based on a total weight of the inorganic material and the second binder.

Aspect 12: A method for manufacturing a separator according to any one of aspects 1 to 11, comprising: preparing a substrate; applying a separator coating slurry to at least one surface of the substrate; and curing the applied separator coating slurry to form a coating layer on at least one surface of the substrate, wherein the separator coating slurry comprises the inorganic material and the first binder.

Aspect 13: The method for manufacturing a separator according to aspect 12, wherein the separator coating slurry further comprises a second binder.

Aspect 14: The method for manufacturing a separator according to aspect 12 or 13, wherein the separator coating slurry comprises the first binder in an amount of 1 wt% to 30 wt% based on a total weight of the inorganic material and the second binder.

Aspect 15: An electrode assembly comprising: a positive electrode; a negative electrode; and the separator according to any one of aspects 1 to 14 disposed between the positive electrode and the negative electrode, wherein at least a portion of the first binder is in contact with both the substrate and the positive electrode, or in contact with both the substrate and the negative electrode.

Hereinafter, embodiments of the present disclosure are further described with reference to specific experimental examples. The embodiments and comparative examples included in the experimental examples are only illustrative of the present invention and do not limit the appended claims. It is apparent to those skilled in the art that various modifications and changes to the embodiments can be made within the scope and spirit of the present disclosure, and such modifications and changes are also considered to fall within the scope of the appended claims.

**Example**

**1. Example 1**

(1) Preparation of Separator

Alumina particles (D50, 0.5 $\mu$m), acrylic latex (A-Latex), and polybutyl acrylate (PBA) with Tg 50 °C (D50, 1.5 $\mu$m) were added to pure water and stirred to prepare a slurry. Based on the total weight of the alumina particles and A-Latex, A-Latex was added at 5 wt% and PBA at 10 wt%.

The prepared slurry was applied to both sides of a 7 $\mu$m-thick polyolefin microporous film using a bar coater and dried to form coating layers on both sides of the microporous film. The thickness of each coating layer was 1.0 $\mu$m.

(2) Preparation of Positive Electrode

As a positive electrode active material, Li[Ni0.88Co0.1 Mn0.02]O2 was used. Carbon black was used as the conductive material, and polyvinylidene fluoride (PVdF) was used as the binder. The materials were mixed and dispersed in N-methyl-2-pyrrolidone (NMP) at a weight ratio of 96.5:2:1.5 to prepare a positive electrode slurry. The slurry was uniformly applied to a 12 $\mu$m-thick aluminum foil, followed by vacuum drying to form the positive electrode active material layer on the aluminum foil, thereby preparing the positive electrode.

(3) Preparation of Negative Electrode

As a negative electrode active material, artificial graphite, single-walled carbon nanotubes (SWCNT), styrene-butadiene rubber (SBR), and carboxymethyl cellulose (CMC) were mixed in a weight ratio of 98:0.5:0.3:1.2 and dispersed in distilled water to prepare a negative electrode slurry. The slurry was uniformly applied to a 10 $\mu$m-thick copper foil and vacuum-dried to form the negative electrode active material layer, thereby preparing the negative electrode.

(4) Preparation of Electrode Assembly

Forty-five positive electrodes and forty-six negative electrodes prepared as described above were stacked with the separator interposed between each positive and negative electrode to assemble a jelly-roll structure. The assembled jelly-roll was hot-pressed at 100 °C under a pressure of 20.0 kgf/cm$^2$ for 120 seconds to thermally fuse the separator, thereby manufacturing the electrode assembly.

**Examples 2 and 3, and Comparative Examples 1 to 4**

In Examples 2 and 3 and Comparative Examples 1 to 4, the electrode assemblies were prepared in the same manner as in Example 1, except that the coating layer thickness, type of inorganic material, particle size of the inorganic material (D50), size of the first binder (D50), content of the first binder, Tg of the first binder, type of the first binder, and content of the second binder were set as shown in Table 1. For comparison, the conditions of Example 1 are also shown in Table 1.

[Table 1]

| Classification | Coating layer thickness ($\mu$m) | Inorganic material | | Second binder | | First binder | | | |
|---|---|---|---|---|---|---|---|---|---|
| | | Type | Particle size (D50, $\mu$m) | Type | Content (wt%) | Particle size (D50, $\mu$m) | Content (wt%) | Tg(°C) | Type |
| Example 1 | 1.0 | Alumina | 0.5 | A-Latex | 5 | 1.5 | 10 | 50 | PBA |
| Example 2 | 3.0 | Boehmite | 1.7+0.3 | A-Latex | 7 | 5.0 | 2.5 | 43 | PAN |
| Example 3 | 2.0 | Boehmite | 0.7 | A-Latex | 3.5 | 3.0 | 25 | 58 | PEHA |
| Comparative Example 1 | 2.0 | Boehmite | 0.5 | A-Latex | 4.5 | 0.3 | 10 | 50 | PBA |
| Comparative Example 2 | 1.0 | Alumina | 0.3 | A-Latex | 5 | 3.0 | 0.5 | 45 | PEHA |
| Comparative Example 3 | 3.0 | Boehmite | 1.2 | A-Latex | 4 | 11 | 15 | 58 | PBA |
| Comparative Example 4 | 2.0 | Boehmite | 0.5 | A-Latex | 5 | 3.0 | 12 | 120 | PAN |

In Table 1, PBA refers to polybutyl acrylate, PEHA refers to polyethylhexyl acrylate, and PAN refers to polyacrylonitrile.

**Evaluation Example**

The electrode assemblies of Examples 1 to 3 and Comparative Examples 1 to 4 were cooled to room temperature and disassembled to evaluate thermal fusibility between the separator and the electrodes (positive or negative).
The evaluation results indicated that the electrode assemblies of Examples 1 to 3 exhibited proper thermal fusibility between the separator and the electrodes, and the thickness after thermal fusion was uniform.
In contrast, the electrode assemblies of Comparative Examples 1, 2, and 4 showed poor thermal fusibility between the separator and the electrodes, with the separator and electrodes easily separating. In Comparative Example 3, thermal fusion occurred, but the thickness was excessive and non-uniform across the surface, resulting in a generally uneven interface.

The poor fusibility in Comparative Example 1 is believed to result from the first binder being too small relative to the coating layer thickness. In Comparative Example 2, poor fusibility is attributed to insufficient first binder content. In Comparative Example 4, although thermal fusion was conducted within a temperature range that did not deform the electrode or separator, the first binder's glass transition temperature was too high to achieve sufficient fusibility, resulting in poor adhesion between the separator and electrodes.

In Comparative Example 3, although the first binder was sufficiently large relative to the coating layer thickness to achieve thermal fusion, the separator and electrodes did not fully contact each other, resulting in poor interfacial adhesion and reduced structural stability.

In Examples 1 to 3, which included a coating layer containing the first binder according to one aspect of the present disclosure, excellent thermal fusibility between the separator and electrodes was observed, and the interface was uniform, resulting in good adhesion.

The above-described results illustrate only an example applying the principles of the present disclosure, and other configurations may be included within the scope of the disclosure without departing from its scope.

## Claims

1. A separator comprising:

   a substrate; and
   a coating layer formed on at least one surface of the substrate,
   wherein the coating layer comprises an inorganic material and a first binder,
   a glass transition temperature of the first binder is 100 °C or less, and
   the separator satisfies the following Equation 1:

   [Equation 1]

   $$1.2 \leq D_{B1}/T_C \leq 2.0$$

   In Equation 1, $D_{B1}$ is a particle diameter (D50) at a volume fraction of 50% in a cumulative particle size distribution of the first binder, and $T_C$ is a thickness of the coating layer.

2. The separator according to claim 1, wherein the separator further satisfies the following Equation 2:

   [Equation 2]

   $$1.4 \leq D_{B1}/T_C \leq 1.8$$

   In Equation 2, $D_{B1}$ and $T_C$ are as defined in claim 1.

3. The separator according to claim 1 or 2, wherein at least a portion of the first binder is in contact with the substrate while at least a portion thereof is exposed to the outside.

4. The separator according to any one of claims 1 to 3, wherein the substrate comprises at least one of a porous polymer and a porous nonwoven fabric.

5. The separator according to any one of claims 1 to 4, wherein the glass transition temperature of the first binder is 40 °C to 60 °C.

6. The separator according to any one of claims 1 to 5, wherein the $D_{B1}$ is 1.2 $\mu$m or more.

7. The separator according to any one of claims 1 to 6, wherein the first binder comprises at least one selected from the group consisting of polyvinylidene fluoride (PVdF), polyvinylidene fluoride-hexafluoropropylene (PVdF-HFP), polyacrylonitrile (PAN), polybutyl acrylate (PBA), polyethylhexyl acrylate (PEHA), styrene-butadiene rubber (SBR), and polyethylene oxide (PEO); or a copolymer of any two or more thereof.

8. The separator according to any one of claims 1 to 7, wherein the $T_C$ is 1 $\mu$m to 20 $\mu$m.

9. The separator according to any one of claims 1 to 8, wherein the coating layer further comprises a second binder.

10. The separator according to claim 9, wherein the inorganic material and the second binder are contained in a weight ratio of 60-99 : 40~1.

11. The separator according to claim 9 or 10, wherein the first binder is included in an amount of 1 wt% to 30 wt% based on a total weight of the inorganic material and the second binder.

12. A method for manufacturing a separator according to any one of claims 1 to 11, comprising:

preparing a substrate;
applying a separator coating slurry to at least one surface of the substrate; and
curing the applied separator coating slurry to form a coating layer on at least one surface of the substrate,
wherein the separator coating slurry comprises the inorganic material and the first binder.

13. The method for manufacturing a separator according to claim 12, wherein the separator coating slurry further comprises a second binder.

14. The method for manufacturing a separator according to claim 12 or 13, wherein the separator coating slurry comprises the first binder in an amount of 1 wt% to 30 wt% based on a total weight of the inorganic material and the second binder.

15. An electrode assembly comprising:

a positive electrode;
a negative electrode; and
the separator according to any one of claims 1 to 14 disposed between the positive electrode and the negative electrode,
wherein at least a portion of the first binder is in contact with both the substrate and the positive electrode, or in contact with both the substrate and the negative electrode.

# FIG. 1

# FIG. 2

```
        ┌─────────────┐
        │    Start    │
        └──────┬──────┘
               ↓
┌────────────────────────────────────────┐
│          Preparing a substrate         │──S100
└────────────────────────────────────────┘
               ↓
┌────────────────────────────────────────┐
│ Applying a separator coating slurry to │──S200
│ at least one surface of the substrate  │
└────────────────────────────────────────┘
               ↓
┌────────────────────────────────────────┐
│ Curing the applied separator coating   │──S300
│ slurry to form a coating layer on at   │
│ least one surface of the substrate     │
└────────────────────────────────────────┘
               ↓
        ┌─────────────┐
        │     End     │
        └─────────────┘
```

## EUROPEAN SEARCH REPORT

Application Number

EP 26 15 0691

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 119 096 411 A (LG ENERGY SOLUTION LTD) 6 December 2024 (2024-12-06) * paragraph [0007]; claims; examples * | 1-15 | INV. H01M50/443 H01M50/449 H01M50/403 H01M50/414 H01M50/451 H01M50/446 |
| X | KR 102 181 313 B1 (LG CHEMICAL LTD [KR]) 26 November 2020 (2020-11-26) * paragraph [0011]; example 3 * | 1,3,4, 6-15 | |
| X | EP 4 258 450 A2 (SK INNOVATION CO LTD [KR]; SK IE TECH CO LTD [KR]) 11 October 2023 (2023-10-11) * paragraph [0057]; examples; tables 1-2 * | 1-6,8, 11-15 | |
| A | US 2023/024649 A1 (HONG HAIYI [CN] ET AL) 26 January 2023 (2023-01-26) * examples * | 1-15 | |
| X | US 2024/063508 A1 (KA KYUNG-RYUN [KR] ET AL) 22 February 2024 (2024-02-22) * example 1 * | 1 | |
| A | EP 4 439 844 A1 (SK INNOVATION CO LTD [KR]; SK IE TECH CO LTD [KR]) 2 October 2024 (2024-10-02) * claims; examples * | 1-15 | TECHNICAL FIELDS SEARCHED (IPC) H01M |
| T | RENLIANG XU ET AL: "Comparison of sizing small particles using different technologies", POWDER TECHNOLOGY ELSEVIER, BASEL (CH), vol. 132, no. 2-3, 24 June 2003 (2003-06-24), pages 145-153, XP002711749, ISSN: 0032-5910, DOI: 10.1016/S0032-5910(03)00048-2 * table 6 * | | |

The present search report has been drawn up for all claims

| Place of search | Date of completion of the search | Examiner |
|---|---|---|
| Munich | 13 May 2026 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

## EP 4 776 418 A1

### ANNEX TO THE EUROPEAN SEARCH REPORT
### ON EUROPEAN PATENT APPLICATION NO.

EP 26 15 0691

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2026

| Patent document cited in search report | | Publication date | Patent family member(s) | | Publication date |
|---|---|---|---|---|---|
| CN 119096411 | A | 06-12-2024 | CN | 119096411 A | 06-12-2024 |
| | | | EP | 4513653 A1 | 26-02-2025 |
| | | | JP | 2025515027 A | 13-05-2025 |
| | | | US | 2025316840 A1 | 09-10-2025 |
| | | | WO | 2024155058 A1 | 25-07-2024 |
| KR 102181313 | B1 | 26-11-2020 | NONE | | |
| EP 4258450 | A2 | 11-10-2023 | EP | 4258450 A2 | 11-10-2023 |
| | | | JP | 2023155220 A | 20-10-2023 |
| | | | US | 2023327287 A1 | 12-10-2023 |
| US 2023024649 | A1 | 26-01-2023 | CN | 115104219 A | 23-09-2022 |
| | | | EP | 4109658 A1 | 28-12-2022 |
| | | | JP | 7446459 B2 | 08-03-2024 |
| | | | JP | 2023508241 A | 01-03-2023 |
| | | | KR | 20220124821 A | 14-09-2022 |
| | | | US | 2023024649 A1 | 26-01-2023 |
| | | | US | 2025239729 A1 | 24-07-2025 |
| | | | WO | 2022110227 A1 | 02-06-2022 |
| US 2024063508 | A1 | 22-02-2024 | CN | 117063345 A | 14-11-2023 |
| | | | EP | 4277005 A1 | 15-11-2023 |
| | | | JP | 7778795 B2 | 02-12-2025 |
| | | | JP | 2024503458 A | 25-01-2024 |
| | | | KR | 20230054288 A | 24-04-2023 |
| | | | US | 2024063508 A1 | 22-02-2024 |
| | | | WO | 2023063764 A1 | 20-04-2023 |
| EP 4439844 | A1 | 02-10-2024 | CN | 118676529 A | 20-09-2024 |
| | | | CN | 222530730 U | 25-02-2025 |
| | | | EP | 4439844 A1 | 02-10-2024 |
| | | | JP | 2024134547 A | 03-10-2024 |
| | | | KR | 20240141480 A | 27-09-2024 |
| | | | US | 2024322365 A1 | 26-09-2024 |

EPO FORM P0459

For more details about this annex : see Official Journal of the European Patent Office, No. 12/82